# EUROPÄISCHE PATENTSCHRIFT

(11) **EP 3 245 023 B1**
(45) Veröffentlichungstag und Bekanntmachung des Hinweises auf die Patenterteilung: **10.04.2019**
(21) Anmeldenummer: 16700816.8
(22) Anmeldetag: 15.01.2016
(51) Int. Cl.: D07B 7/14

(54) **BEARBEITUNGSEINHEIT FÜR EINE WERKZEUGMASCHINE UND EINE DERARTIGE WERKZEUGMASCHINE**
MACHINING UNIT FOR A MACHINE TOOL AND SUCH A MACHINE TOOL
UNITÉ D'USINAGE DESTINÉE À UNE MACHINE-OUTIL ET MACHINE-OUTIL DE CE TYPE

(30) Priorität: 16.01.2015 DE 102015200665
(43) Veröffentlichungstag der Anmeldung: 22.11.2017
(73) Patentinhaber: DECKEL MAHO Pfronten GmbH, 87459 Pfronten (DE)
(72) Erfinder: GARBARSKY, Florian, 87488 Betzigau (DE)
(74) Vertreter: MERH-IP Matias Erny Reichl Hoffmann Patentanwälte PartG mbB
(86) Internationale Anmeldenummer: PCT/EP2016/050769
(87) Internationale Veröffentlichungsnummer: WO 2016/113393

(56) Entgegenhaltungen:
- DE-A1-102010 032 920
- DE-U1- 20 305 487
- DE-U1- 20 305 679
- DE-U1-202011 108 153

## Beschreibung

Die vorliegende Erfindung betrifft eine Bearbeitungseinheit für eine Werkzeugmaschine mit einer vorteilhaften Leitungsführung und eine Werkzeugmaschine mit einer derartigen Bearbeitungseinheit.

### HINTERGRUND DER ERFINDUNG

Gattungsgemäße aus dem Stand der Technik bekannte Bearbeitungseinheiten umfassen zumeist einen an der Werkzeugmaschine anbringbaren Kopfträger und einen am Kopfträger schwenkbar vorgesehenen Schwenkkopf mit einer Spindel. Die für den Schwenkkopf und die Spindel benötigten Leitungen wie bspw. Energiezufuhrleitungen oder Steuerleitungen werden dabei über verschiedenste Leitungsführungen vom Kopfträger zum Schwenkkopf geführt.

Aus der DE 100 20 806 A1 ist eine Vorrichtung zur Führung von Leitungen zwischen zwei relativ zueinander bewegbaren Teilen insbesondere von Werkzeugmaschinen die mehrere gelenkig miteinander verbundene Aufnahmeelemente für die Leitungen enthält bekannt. Eine Führungsvorrichtung, die auch zur Leitungsführung zwischen quer zueinander verschiebbaren Teilen geeignet ist, wird dadurch gekennzeichnet, dass an den beiden Enden der Vorrichtung jeweils ein Drehgelenk zur Montage an den relativ zueinander bewegbaren Teilen angeordnet ist.

In der DE 102 51257 A1 ist eine Bearbeitungseinheit für eine programmgesteuerte Fräs- und Bohrmaschine mit einem in mehreren Koordinatenachsen verfahrbaren Kopfträger der eine um 45° nach vorne-unten weisende Drehachse enthält gezeigt. An einem kastenförmigen Rückteil des Spindelkopfes ist ein Flexrohr mittels eines Adapters verschwenkbar angeschlossen, dessen oberes Ende über einen verdrehbaren Winkelstutzen mit dem Mittelteil des Kopfträgers 1 verbunden ist.

DE 20 2011 108153 U1 offenbart eine Bearbeitungseinheit nach dem Oberbegriff des Anspruchs 1.

Es ist eine Aufgabe der vorliegenden Erfindung eine gattungsgemäße Bearbeitungseinheit so auszubilden, dass diese einen vereinfachten konstruktiven Aufbau aufweist. Zudem ist es eine Aufgabe die Leitungsführung zwischen zwei relativ zueinander bewegbaren Teilen der Bearbeitungseinheit zu optimieren.

### DETAILIERTE BESCHREIBUNG DER ERFINDUNG

Zur Lösung der vorstehend genannten Aufgabe wird eine Bearbeitungseinheit für eine Werkzeugmaschine gemäß Anspruch 1 bzw. eine Werkzeugmaschine mit einer derartigen Bearbeitungseinheit vorgeschlagen. Abhängige Ansprüche betreffen bevorzugte Ausführungsbeispiele der vorliegenden Erfindung.

Die Bearbeitungseinheit zum Einsatz an einer Werkzeugmaschine umfasst einen an der Werkzeugmaschine anbringbaren Kopfträger mit einem Kopfträgergehäuse und einem um eine Schwenkkopfdrehachse schwenkbar relativ zum Kopfträger vorgesehenen Schwenkkopf mit einem Schwenkkopfgehäuse. Ein am Schwenkkopf angebrachter Spindelkopf weist eine Arbeitsspindel auf, und im Inneren des Kopfträgergehäuses zum Schwenkkopf verlaufenden ist eine Leitungsführung mit einer Mehrzahl von hintereinander entlang der Leitungsführung angeordneten, beweglich miteinander verbundenen Gliedern vorgesehen. Benachbarte Glieder sind relativ zueinander verdrehbar und schwenkbar wobei jedes Glied jeweils ein Mittelstück und eine davon beabstandete Ummantelung aufweisen kann und das Mittelstück über ein oder mehrere Verbindungselemente mit der Ummantelung in Verbindung stehen kann. Durch diese Ausgestaltung wird eine kostengünstige und flexible Anbindung des Schwenkkopfs and den Kopfträger bereitgestellt. Insbesondere sind die Leitungen dreh- und schwenkbar mit dem Schwenkkopf verbunden. Zudem bietet die Anordnung der Leitungsführung im Inneren des Gehäuses einen besonderen Schutz der Leitungen, sodass deren Lebensdauer erhöht werden kann.

Die Leitungen sind vorzugsweise in der Leitungsführung angeordnet und verlaufen an den Gliedern jeweils zwischen dem Mittelstück und der Ummantelung. Somit sind die Leitungen einerseits gut vor äußeren Einflüssen geschützt und andererseits lassen sich die Leitungen aufgrund der zentralen Anordnung leicht mit dem Schwenkkopf mitdrehen.

Bevorzugt sind die Verbindungsflächen der Ummantelung benachbarter Glieder relativ zueinander beweglich. Somit ist es möglich einen gelenkartigen Schlauch zur Aufnahme der Leitungen bereitzustellen.

Die Mittelstücke benachbarter Glieder sind bevorzugt über eine Gelenkverbindung miteinander verbunden. Dabei sind die Glieder bevorzugt über die Gelenkverbindung relativ zueinander verdrehbar und/oder schwenkbar. Die zentrale Anbindung der Glieder nur über die Mittelstücke gewährleistet einen einfachen Aufbau der Leitungsführung bei gleichzeitig sehr hoher Beweglichkeit. Da die Mittelstücke zudem innerhalb der Ummantelung angeordnet sein können sind diese besonders gut vor äußeren Einflüssen geschützt.

Die Bearbeitungseinheit weist bevorzugt eine Leitungsführung auf die über jeweilige Anschlusselemente am Kopfträger und am Schwenkkopf befestigbar ist wobei der Kopfträger und der Schwenkkopf zueinander um zumindest einen Drehwinkel im Bereich von + 180° bis -180° verdrehbar sein können und die über die Anschlusselemente befestigte Leitungsführung durch die Bewegung der Glieder der Drehbewegung des Schwenkkopfs folgen kann. Dadurch ist es möglich abhängig von der Anzahl der Glieder und der Anzahl der Freiheitsgrade der Verbindung der einzelnen Glieder und deren relativen Dreh-/Schwenkwinkeln eine optimale und flexible Leitungsführung bereitzustellen welche sich mit möglichst geringen Widerstand verdrehen/verschwenken lässt.

Bevorzugt kann zumindest das schwenkkopfseitige Anschlusselement derart angeordnet sein, dass die Leitungsführungsachse des Anschlusselements parallel zur Schwenkkopfdrehachse und insbesondere zentriert auf der Schwenkkopfdrehachse angeordnet ist. Durch diese spezielle Anordnung wird der Bewegungsweg der Leitungen bei einer Verdrehung des Schwenkkopfs auf ein Minimum reduziert. Dadurch werden die Leitungen und Leitungsführungen minimal belastet was eine erhöhte Lebensdauer bewirkt.

Die Leitungsführung kann zumindest N Glieder umfassen die gelenkig miteinander verbunden sind wobei die Enden der Leitungsführung zueinander um zumindest einen Drehwinkel im Bereich von + 180° bis -180° verdrehbar sein können. Somit wird eine gleichmäßige Verteilung des gesamten Drehwinkelbereichs auf die einzelnen Glieder bzw. Gliederpaare bewirkt, sodass auch die Belastung gleichmäßig verteilt ist. Dies erhöht vorteilhaft die Lebensdauer der Glieder und der Leitungsführung.

Bei N Gliedern können bevorzugt jeweils zwei Verbundene Glieder über mehr als 360°/N verdrehbar sein. Somit können die Glieder relativ zueinander um einen großen Winkelbereich verdreht werden, was die Flexibilität und Haltbarkeit der Leitungsführung erhöht.

Die benachbarten Glieder der Leitungsführung können zueinander um zumindest einen Schwenkwinkel im Bereich von + 10° bis -10° schwenkbar sein. Somit können die Stirnflächen zweier benachbarter Glieder um +/- 10° relativ zueinander geneigt werden, sodass die benötigte Anzahl der Glieder für die schwenkbare Leitungsführung reduziert werden kann. Ein höherer Schwenkwinkel wird insbesondere durch die Erhöhung der Krümmung der Verbindungsflächen der Glieder erreicht. In einer vorteilhaften Ausführungsform beträgt der Schwenkwinkel bis zu +/- 30°.

Das Mittelstück kann zur Erhöhung der Stabilität und Festigkeit über zumindest drei getrennte rippenartige Verbindungselemente mit der Ummantelung verbunden sein.

Das Mittelstück kann zur Verbindung mit benachbarten Gliedern eine Gelenkkugel und eine Kugelpfanne aufweisen, sodass auf einfache Weise die Verdrehbarkeit und Verschwenkbarkeit der Glieder relativ zueinander mit nur einem Gelenk erreicht werden kann.

Das Mittelstück kann bevorzugt einen Kanal zur Aufnahme eines flexiblen Verbindungselements aufweist und die Glieder können über das flexible Verbindungselement verbunden sein. Das flexible Verbindungsglied kann bspw. ein Seil sein auf welches die Glieder über die Kanäle aufgeschoben werden. Besonders vorteilhaft ist dabei ein stabiles Drahtseil mit metallischen Drähten. Dadurch lässt sich auf einfache und flexible Weise eine Leitungsführung herstellen. Zudem werden die Verbindungsgelenke der Glieder entlastet.

Die Ummantelung kann ein schwenkbares Segment umfassen wobei das schwenkbare Segment bevorzugt in radiale Richtung schwenkbar sein kann. Das schwenkbare Segment kann zudem lösbar am Verbindungselement angeordnet sein. Somit können die Leitungen welche sich im Inneren der Leitungsführung befinden durch wegklappen des Segments inspiziert oder sogar ausgetauscht werden.

Das schwenkbare Segment kann bevorzugt über ein im Endbereich des Verbindungselements angebrachtes Gelenk mit dem Verbindungselement verbunden sein. Dadurch wird es möglich eine vorteilhafte steife Struktur des Glieds zu erreichen.

Die Ummantelung kann bevorzugt die Leitungen zumindest teilweise umhüllen und die Glieder können sich derart überlappen, dass ein von der Ummantelung umschlossener Bereich gegenüber einem Bereich außerhalb der Ummantelung abgedichtet werden kann. Insbesondere durch Dichtlippen im Verbindungsbereich der Ummantelung der benachbarten Glieder kann diese Abdichtung erreicht werden. Somit wird die Schutzfunktion der Leitungsführung optimiert und die Leitungen sind vor bspw. heißer Späne oder Ölen optimal geschützt.

Die Verbindungsflächen der Ummantelung benachbarter Glieder können sich zumindest teilweise überlappen. Dadurch ist es möglich einen geschlossenen schützenden Schlauch bereitzustellen welcher die Leitungen umgibt.

Die Verbindungselemente können sich vom Mittelstück in radialer Richtung zur Ummantelung erstrecken. Dadurch wird die Festigkeit der Ummantelung erhöht.

Bevorzugt kann eine Werkzeugmaschine eine Bearbeitungseinheit mit zumindest einem der vorhergehenden Merkmale umfassen.

### KURZBESCHREIBUNG DER FIGUREN

- **Fig. 1**: zeigt eine erste Ansicht der erfindungsgemäßen Bearbeitungsmaschine
- **Fig. 2**: zeigt eine Draufsicht auf den Schwenkkopf
- **Fig. 3A**: zeigt eine Vorderansicht auf ein Leitungsführungsglied
- **Fig. 3B**: zeigt eine Seitenansicht eines Leitungsführungsglieds
- **Fig. 3C**: zeigt eine Vorderansicht einer weiteren Ausführungsform eines Leitungsführungsglieds
- **Fig. 4**: zeigt einen Abschnitt der Leitungsführung
- **Fig. 5A**: zeigt eine Schnittansicht einer Ausführungsform eines Leitungsführungsglieds
- **Fig. 5B**: zeigt eine Schnittansicht einer weiteren Ausführungsform eines Leitungsführungsglieds
- **Fig. 6**: zeigt eine zweite Ansicht der erfindungsgemäßen Bearbeitungsmaschine
- **Fig. 7**: zeigt eine Seitenansicht auf den Schwenkkopf

### DETAILIERTE BESCHREIBUNG BEVORZUGTER AUSFÜHRUNGSFORMEN DER VORLIEGENDEN ERFINDUNG

Im Folgenden werden Ausführungsbeispiele der vorliegenden Erfindung anhand der beispielhaften Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

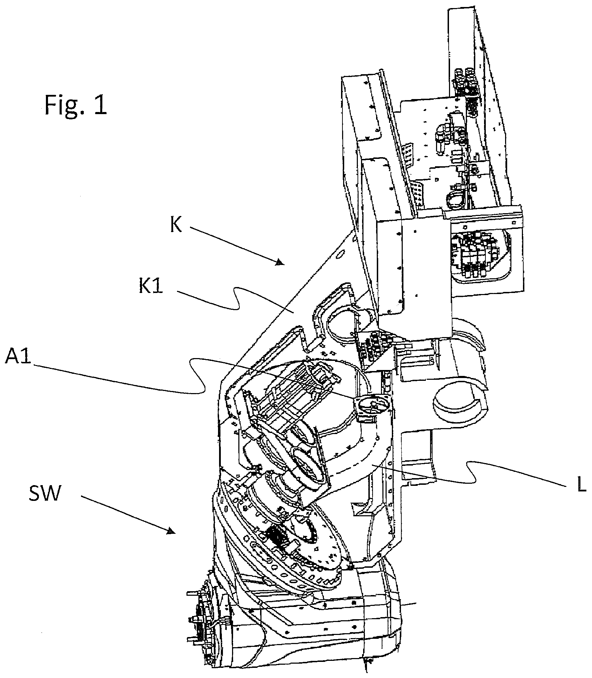

In Figur 1 ist die Bearbeitungseinheit der vorliegenden Erfindung dargestellt. Die Bearbeitungseinheit umfasst einen Kopfträger K und einen damit verbundenen Schwenkkopf SW mit einem Schwenkkopfgehäuse SW1. Der Schwenkkopf SW ist dabei um eine Schwenkachse drehbar relativ zum Kopfträger K ausgestaltet. Der Kopfträger K der Bearbeitungseinheit ist bspw. entlang zweier in einer Bewegungsebene liegenden Achsen verstellbar an einer Stirnseite der Werkzeugmaschine vorgesehen. Der Kopfträger K weist zudem ein Kopfträgergehäuse K1 auf.

Der in der Figur 1 dargestellte Kopfträger K ist in einem Winkel von im Wesentlichen 45° gegenüber der Bewegungsebene angeordnet. An der Stirnseite des Kopfträgers K ist über eine Lagerung der Schwenkkopf SW mit dem Spindelkopf SP vorgesehen. Der Schwenkkopf SW ist dabei um die Schwenkachse drehbar angeordnet. Der am Schwenkkopf SW fixierte Spindelkopf SP dreht sich mit dem Schwenkkopf SW mit. Die Drehung des Schwenkkopfs erfolgt dabei in einem Drehwinkelbereich von bevorzugt +/- 180° um eine Neutralstellung relativ zum Kopfträger K.

Die Drehung wird über Zahnritzel bewirkt welche über einen Verstellmotor angetrieben werden. Die angetriebenen Zahnritzel stehen im Eingriff mit einem Zahnrad des Schwenkkopfs SW (Verstellzahnrad SW2). Somit bewirkt die Drehung des Zahnrads des Schwenkkopfs SW eine Drehung des gesamten Schwenkkopfs SW und des daran befestigten Spindelkopfs SP.

Der Spindelkopf SP umfasst zudem einen Motor (bzw. Spindelantrieb) mit einer Antriebswelle und einem Anschlussbereich.

Zwischen dem Schwenkkopf SW und dem Kopfträger K sind Leitungen vorgesehen welche in einer Leitungsführung L aufgenommen sind. Diese Leitungen umfassen bspw. Steuerleitungen und Antriebsleitungen für den Spindelkopf SP zum Antrieb und zur Steuerung der Spindel SP1. Über einen kopfträgerseitigen Anschluss A1 ist die Leitungsführung L am Kopfträger K angebracht. Die Leitungsführung L ist dabei wie ein gelenkartiger Schlauch aufgebaut und umhüllt schützend die Leitungen. Bei einer Drehung des Schwenkkopfs SW um die Schwenkachse werden die Leitungen und die Leitungsführung entsprechend mitgeführt. Bei jeder Drehung des Schwenkkopfs SW werden somit die Leitungen mitgedreht und dadurch strukturell beansprucht. Vorteilhaft sind die Leitungen im Bereich der Schwenkachse angeordnet, sodass der Bewegungsradius bei der Drehbewegung reduziert werden kann und somit die strukturelle Beanspruchung der Leitungen und insbesondere des Schutzmantels der Leitungen und der Leitungsführung reduziert werden kann. Dadurch kann insbesondere die Lebensdauer der Leitungen erhöht werden.

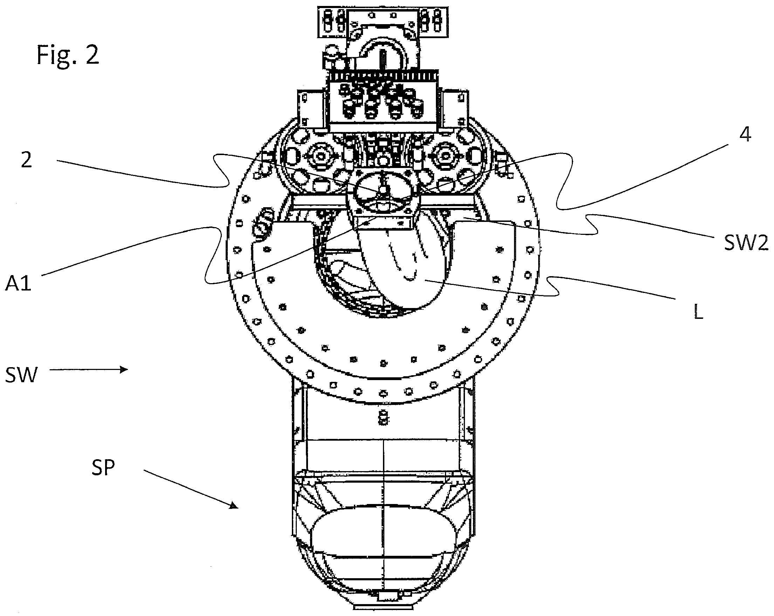

In Figur 2 ist eine Draufsicht auf den Schwenkkopf SW in der Neutralstellung dargestellt. Im unteren Bereich ist dabei der Spindelkopf SP mit der Spindel SP dargestellt. Die Leitungsführung L ist über das Anschlusselement A1 am Kopfträger befestigt. Die Leitungsführung besteht aus Leitungsführungsgliedern (Glieder 1) welche jeweils im Zentrum ein Mittelstück 2 aufweisen welches über in radiale Richtung ausgedehnte Verbindungselemente 4 mit der Ummantelung der Leitungsführung L in Verbindung steht und diese auf Abstand hält. Durch diesen Aufbau wird ein gelenkartiger Schlauch als Leitungsführung L bereitgestellt.

In Figur 2 ist die Leitungsführung mittig im Bereich der Schwenkachse zwischen Kopfträger K und Schwenkkopf SW angeordnet wobei die Schwenkachse in Figur 2 orthogonal auf die Bildebene verläuft, koaxial zur Drehachse des Verstellzahnrads SW2 des Schwenkkopfs SW. Im dargestellten Ausführungsbeispiel weist das Anschlusselement A1 vier Verbindungslöcher am Verbindungsflansch auf. Durch Verbindungsmittel wie Bolzen oder Schrauben welche in den Verbindungslöchern vorgesehen werden, wird das Anschlusselement A1 am Anschlussflansch des Kopfträgers K befestigt.

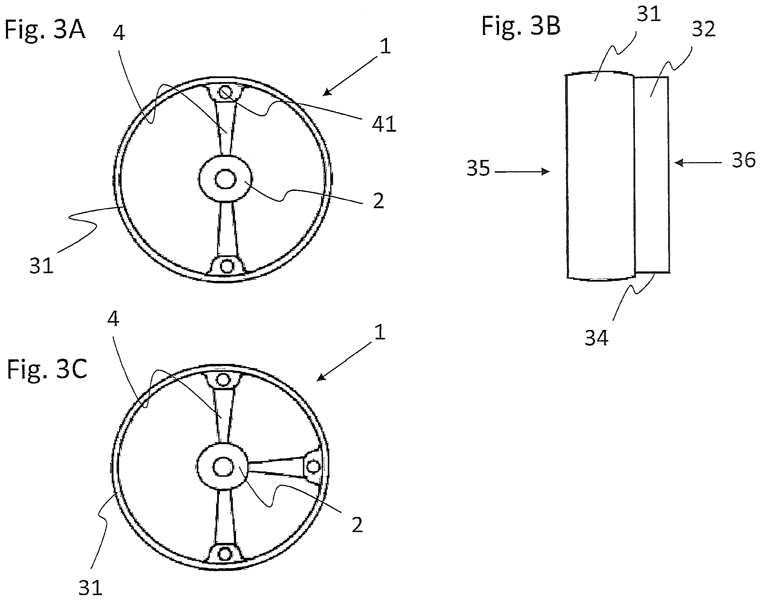

Die Leitungsführung L ist aus mehreren Leitungsführungsgliedern (Glieder 1) aufgebaut wobei an den Enden der Leitungsführung L, Anschlusselemente A1 und A2 vorgesehen sind welche am Trägerkopf K bzw. am Schwenkkopf SW angeflanscht werden. In Figur 3A ist eine Vorderansicht eines Leitungsführungsglieds 1 dargestellt. Die schützende Hülle der Leitungsführung L wird dabei von der Umhüllung (bzw. Ummantelung) 31, 32 gebildet. In einer bevorzugten Ausführung weisen die Glieder zueinander einen Verdrehwinkel von+/- 10° auf.

Die Ummantelung 31, 32 besteht bevorzugt aus einem Polymermaterial wobei die äußere Oberfläche der Ummantelung welche dem Mittelstück 2 in radialer Richtung abgewandt ist eine Rundung aufweisen kann. In Figur 3B ist das Glied 1 mit einer solchen Rundung welche als bauchige Mantelfläche der Ummantelung 31 ausgeführt ist dargestellt. Die Abrundung dient insbesondere der weiteren Versteifung der Mantelfläche des Glieds 1 und damit zur Erhöhung der Stabilität.

Die Ummantelung weist zudem einen Verbindungsabschnitt 32 auf. Über diesen Verbindungsabschnitt der Ummantelung werden die einzelnen Glieder 1 ineinander gesteckt um die Ummantelung der Leitungsführung L zu bilden. In Figur 3C ist der Verbindungsabschnitt der Ummantelung dargestellt. Aneinandergrenzende Glieder 1 werden über die Verbindungsabschnitte ineinander gesteckt wobei die Verbindungsfläche 34 des Verbindungsabschnitts 32 bevorzugt leicht gekrümmt oder keilförmig ausgebildet ist. Das hintere Ende des Glieds 1 der sich verjüngenden Verbindungsfläche wird somit in das vordere Ende des benachbarten Glieds gesteckt, sodass die jeweiligen Verbindungsflächen einander berühren. Durch die gekrümmte bzw. keilförmige Ausgestaltung der Verbindungsflächen ergibt sich die Möglichkeit, dass die benachbarten Glieder zueinander schwenkbar sind. Insbesondere sind benachbarte Glieder derart zueinander schwenkbar ausgeführt, dass die Stirnseite 35 des angrenzenden Glieds relativ zur Rückseite 36 des anderen Glieds um einen Schwenkwinkel neigbar ausgeführt ist. Somit werden durch die Schwenkung der benachbarten Glieder die Symmetrielinien der Glieder relative zueinander geneigt. Die Enden der aus mehreren Gliedern bestehenden Leitungsführung L können somit relativ zueinander um einen Gesamtschwenkwinkel geschwenkt werden, in Abhängigkeit der Summe der Schwenkwinkel der benachbarten Glieder 1. Benachbarte Glieder bilden somit Gliederpaare mit einem bestimmten Schwenkwinkel von insbesondere +/-10° und bevorzugt +/-15°. Abhängig von der Anzahl der Gliederpaare ist eine Schwenkbewegung der Enden der Leitungsführung L um die Summe der Schwenkwinkel der Gliederpaare möglich. Jede schwenkbare Verbindung zweier aneinandergrenzender Glieder 1 ist dabei als schwenkbares Gliederpaar anzusehen. Beispielsweise kann eine Leitungsführung L, welche 10 schwenkbare Gliederpaare umfasst, eine Schwenkbewegung von 150° durchführen, vorausgesetzt dass jedes Gliederpaar einen Schwenkwinkel von 15° aufweist. Somit können die Enden einer solchen Leitungsführung L um 150° zueinander geschwenkt werden. Zudem beträgt der Torsionswinkel eines Gliederpaars bevorzugt +/-10°.

Die Ummantelung 31 ist von dem Mittelstück 2 über die Verbindungselemente 4 beabstandet. Die Verbindungselemente 4 sind als rippenartige Elemente vorgesehen welche sich vom Mittelstück 2 in radialer Richtung zur Ummantelung 31 erstrecken. Über Befestigungsmittel 41 wie bspw. Stifte oder Schrauben werden die Verbindungselemente 4 in Fassungen der Ummantelung angebracht und fixiert. Als Werkstoff der Verbindungselemente können bevorzugt auch Polymere verwendet werden. Die Ummantelung kann sich aus Kreissegmenten zusammensetzen. Insbesondere kann somit abhängig von der jeweiligen Ausführungsform die kreisförmige Ummantelung 31 mit zugehörigem Verbindungsabschnitt 32 aus verschiedenen Kreissegmenten zusammengesetzt werden. Vorteilhaft ist die Ummantelung aus zwei halbkreisförmigen Ummantelungsteilstücke zusammengesetzt welche zusammengebaut die in Figur 3A dargestellte Kreisform der Ummantelung 31 ergeben. Die Ummantelungsteilstücke sind dabei insbesondere über Verbindungsabschnitte im Bereich der Fassungen der Ummantelung miteinander fixiert.

Eine weitere Ausführungsform eines Leitungsführungsglieds 1 ist in Figur 3C dargestellt. In dieser Ausführung sind drei Verbindungselemente 4 zur Fixierung der Ummantelung 31 angeordnet. Die vorliegende Erfindung ist jedoch nicht auf diese Ausführungsform beschränkt. Die drei dargestellten Verbindungselemente 4 können auch in regelmäßigen Abständen von 120° zueinander angeordnet sein. Dies hat den Vorteil dass die strukturelle Festigkeit des Glieds 1 erhöht werden kann. Möglich ist zudem eine Ausführungsform mit nur einem einzigen Verbindungselement 4 wodurch der Aufbau des Glieds 1 vereinfacht werden kann. Abhängig von der jeweiligen Belastung welcher die Ummantelung ausgesetzt ist, können auch vier oder mehr Verbindungselemente 4 vorgesehen werden welche bevorzugt in regelmäßigen Abständen zueinander angeordnet sind. Die Verbindungselemente 4 weisen zur Erhöhung der Steifigkeit und Stabilität des Glieds 1 einen sich in radialer Richtung vergrößernden Querschnitt auf. Dadurch wird zudem die Fixierung des Verbindungselements 4 mit der Fassung der Ummantelung 31 verbessert da der Anschlussbereich vergrößert wird.

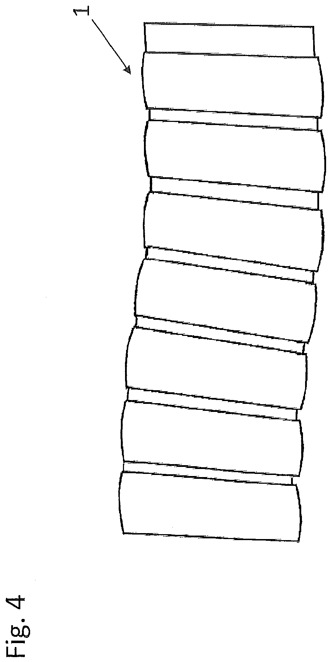

In Figur 4 ist ein Abschnitt einer Leitungsführung L dargestellt. Dabei sind die Glieder 1 ineinander gesteckt. Durch die Schwenkbewegung der einzelnen Gliederpaare wird die Schwenkbewegung der Leitungsführung L ermöglicht, sodass die Enden der Leitungsführung relativ zueinander geschwenkt werden können.

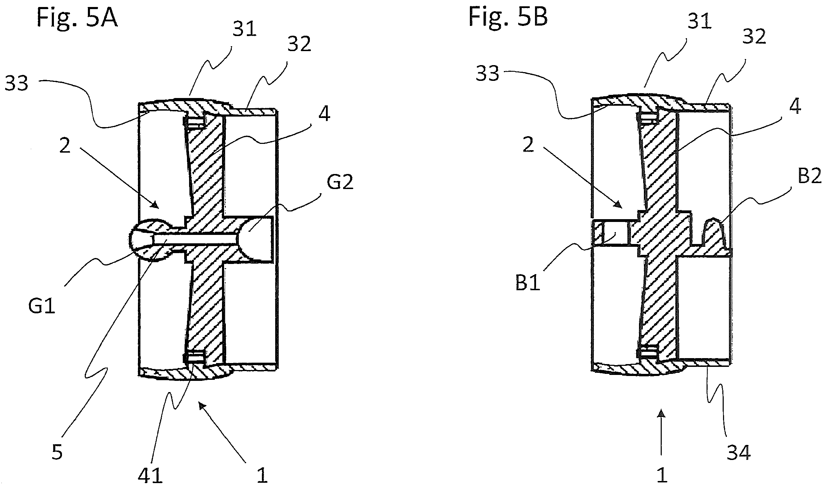

Die Ummantelung 31 und der Verbindungsabschnitt 32 der Ummantelung sind über das Verbindungselement 4 mit dem Mittelstück 2 verbunden. Zur Verbindung der Mantelflächen benachbarter Glieder 1 ist an der Ummantelung 31 eine vordere Verbindungsfläche 33 und am Verbindungsabschnitt 32 der Ummantelung eine hintere Verbindungsfläche 34 vorgesehen. In Figur 5A ist eine vordere Verbindungsfläche 33 dargestellt welche eine konkave Krümmung aufweist. Diese Krümmung der vorderen Verbindungsfläche 33 ermöglicht die Schwenkbewegung zweier verbundener benachbarter Glieder. Über die Fassung der Ummantelung 32 wird das Verbindungselement 4 über Befestigungsmittel 41 mit der Ummantelung 31 verbunden. Die Verbindung kann dabei lösbar ausgestaltet sein, sodass das die Ummantelung 31 des Glieds 1 ausgetauscht werden kann.

Das Mittelstück 2 der in Figur 5A dargestellten Ausführungsform des Glieds 1 weist einen Gelenkkopf G1 und eine Gelenkpfanne G2 auf. Der Gelenkkopf G1 wird zur Verbindung zweier benachbarter Glieder 1 in die Gelenkpfanne G2 des benachbarten Glieds 1 eingebracht. Diese gelenkige Verbindung der Glieder 1 ermöglicht somit eine Schwenkbewegung und eine Drehbewegung der benachbarten Glieder relativ zueinander. Somit können die benachbarten Glieder gegeneinander verdreht werden und zusätzlich können die Glieder 1 zueinander geneigt/geschwenkt werden. Die Stirnseite 35 des ersten Glieds kann relativ zur Rückseite 36 des benachbarten zweiten Glieds somit geneigt und/oder verdreht werden.

Das Mittelstück 2 kann zusätzlich, wie in Figur 5A dargestellt einen Kanal 5 aufweisen in welchem ein flexibles Verbindungselement aufgenommen werden kann. Insbesondere kann somit über ein Seil welches durch die Kanäle 5 benachbarter Glieder 1 geführt wird eine Verbindung der Glieder 1 bewirkt werden. Dieser Kanal 5 ist jedoch lediglich alternativ und nicht zwingend vorgesehen. Abhängig von der Belastung der jeweiligen Bearbeitungseinheit kann durch Vorsehung eines solchen Kanals 5 und eines flexiblen Verbindungselements die Festigkeit der Verbindung der benachbarten Glieder 1 erhöht werden und somit können gleichzeitig auch die Belastungen für die Verbindungsgelenke wie beispielsweise des Gelenkkopfs G1 und der Gelenkpfanne G2 reduziert werden.

Im von der Ummantelung umschlossenen Innenbereich zwischen dem Mittelstück 2 und der Ummantelung 31, 32 werden Leitungen der Bearbeitungseinheit aufgenommen.

Das Mittelstück 2 und die Verbindungselemente 4 können einstückig ausgestaltet sein, sodass die Anzahl der benötigten Bauteile reduziert werden kann, wie in Figur 5A und 5B dargestellt. Alternativ können die Verbindungsstücke 4 jedoch getrennt vom Mittelstück 2 vorliegen, sodass die Verbindungsstücke 4 lösbar mit dem Mittelstück 2 z.B. über Steckverbindungen verbunden sein kann. Die Fassungen der Ummantelung 31 weisen Bohrungen auf in welche die Befestigungsmittel 41 eingebracht werden. Die Befestigungsmittel 41 fixieren dabei das Verbindungsmittel 4 mit der Ummantelung 31. Bevorzugt sind die Befestigungsmittel 41 als zylinderförmige oder kegelförmige Stifte ausgebildet welche in die Bohrungen der Fassung der Ummantelung eingebracht werden und das Verbindungselement 4 mit der Ummantelung 31 kraftschlüssig verbindet. Die Befestigungsmittel 4 können zudem als Teil des Verbindungselements 4 vorliegen, sodass das die Verbindungselemente 4 zur Verbindung mit der Ummantelung 31 auf einfache Weise in die Ummantelung kraftschlüssig eingesteckt werden kann. Damit wird insbesondere der Zusammenbau des Glieds 1 erleichtert.

In Figur 5B ist ein Glied 1 dargestellt mit einer alternativen Ausgestaltung des Mittelstücks 2. Dabei wird die gelenkige Verbindung benachbarter Glieder 1 durch ein Zusammenführen des Zapfens B2 mit der Öffnung B2 erreicht. Durch die kugelförmige Ausgestaltung des Zapfens B2 und der kalottenartigen Ausgestaltung der Öffnung B1 wird eine Dreh- und Schwenkbewegung der benachbarten Glieder ermöglicht.

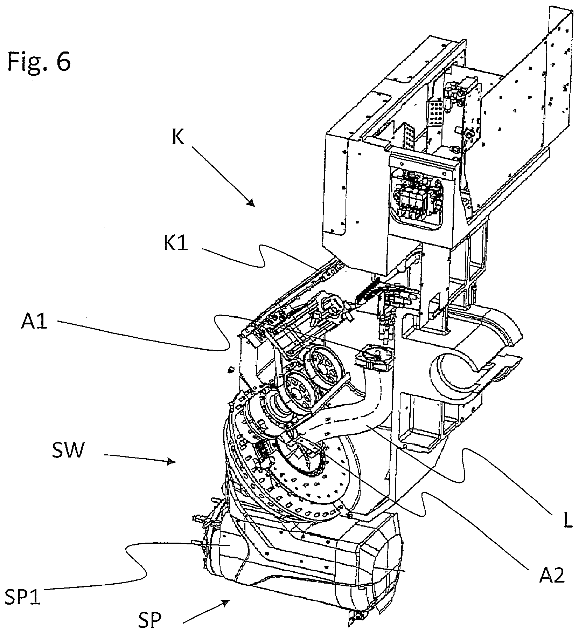

In Figur 6 ist die Leitungsführung L in der Bearbeitungseinheit dargestellt. Das schwenkkopfseitige Anschlusselement A2 ist dabei koaxial auf der Verstellzahnradachse des Verstellzahnrads SW2 des Schwenkkopfs angeordnet. Durch diese mittige Anordnung des schwenkkopfseitigen Anschlusselements A2 wird sichergestellt, dass sich bei einer Drehbewegung des Schwenkkopfs SW um die Schwenkachse die Leitungsführung L bevorzugt möglichst nahe an der Drehachse befindet und sich somit der Bewegungsbereich bei einer Drehung minimieren lässt wodurch die Leitungen weniger belastet werden. Das Anschlusselement dreht sich somit bei einer Drehbewegung des Schwenkkopfs um die eigene Achse. Durch die in den Figuren 3A bis 5B beschriebene Ausgestaltung der Leitungsführung L ist Lässt sich der Verschleiß der Leitungen und der Leitungsführung reduzieren, auch wenn das schwenkkopfseitige Anschlusselement A2 nicht genau koaxial zur Schwenkachse angeordnet ist.

Wie in Figur 6 ersichtlich ist die Leitungsführung innerhalb des Kopfträgergehäuses K1 vorgesehen. Durch eine derartige Ausgestaltung ist es möglich die Umwelteinflüsse und insbesondere die Einflüsse welche aus der spanenden Bearbeitung bei Einsatz der Spindel resultiert zu reduzieren. Somit wird vermieden, dass bspw. heiße Späne und Öle beim Arbeitsprozess der Bearbeitungseinheit auf die Leitungsführung L treffen. Somit kann die Lebensdauer der Leitungsführung erhöht werden.

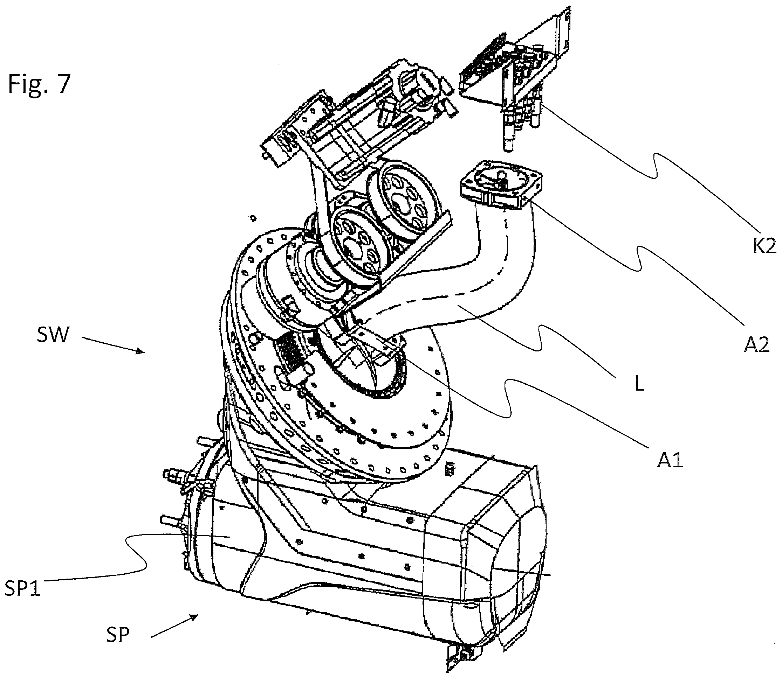

In Figur 7 sind die kopfträgerseitigen Leitungsanschlüsse K2 dargestellt. Die Leitungen werden an den kopfträgerseitigen Leitungsanschlüssen K2 angeschlossen und durch die Leitungsführung bis zum schwenkkopfseitigen Anschlusselement A1 durchgeführt.

## Patentansprüche

1. Bearbeitungseinheit zum Einsatz an einer Werkzeugmaschine mit
- einem an der Werkzeugmaschine anbringbaren Kopfträger (K) mit einem Kopfträgergehäuse (K1),
- einem um eine Schwenkkopfdrehachse schwenkbar relativ zum Kopfträger (K) vorgesehenen Schwenkkopf (SW) mit einem Schwenkkopfgehäuse (SW1),
- einem am Schwenkkopf (SW) angebrachten Spindelkopf (SP) mit einer Arbeitsspindel (SP1), und
- einer im Inneren des Kopfträgergehäuses (K1) zum Schwenkkopf (SW) verlaufenden Leitungsführung (L) mit einer Mehrzahl von hintereinander entlang der Leitungsführung (L) angeordneten, beweglich miteinander verbundenen Gliedern (1),
wobei benachbarte Glieder (1) relativ zueinander schwenkbar sind,
**dadurch gekennzeichnet, dass** benachbarte Glieder (1) relativ zueinander verdrehbar sind, und dass jedes Glied (1) jeweils ein Mittelstück (2) und eine davon beabstandete Ummantelung (31, 32) aufweist und das Mittelstück (2) über eines oder mehrere Verbindungselemente (4) mit der Ummantelung (31, 32) in Verbindung steht.

2. Bearbeitungseinheit nach Anspruch 1, wobei die Leitungen in der Leitungsführung (L) angeordnet sind und an den Gliedern (1) jeweils zwischen dem Mittelstück (2) und der Ummantelung (31, 32) verlaufen.

3. Bearbeitungseinheit nach Anspruch 1 oder 2, wobei Verbindungsflächen der Ummantelung (31, 32) benachbarter Glieder (1) relativ zueinander beweglich sind.

4. Bearbeitungseinheit nach zumindest einem der Ansprüche 1 bis 3, wobei die Mittelstücke (2) benachbarter Glieder (1) über eine Gelenkverbindung miteinander verbunden sind, und die Glieder (1) über die Gelenkverbindung relativ zueinander verdreht und/oder geschwenkt werden können.

5. Bearbeitungseinheit nach zumindest einem der Ansprüche 1 bis 4, wobei die Leitungsführung (L) über jeweilige Anschlusselemente (A1, A2) am Kopfträger (K) und am Schwenkkopf (SW) befestigbar ist und der Kopfträger (K) und der Schwenkkopf (SW) zueinander um zumindest einen Drehwinkel im Bereich von + 180° bis -180° verdrehbar sind wobei die über die Anschlusselemente (A1, A2) befestigte Leitungsführung (L) durch die Bewegung der Glieder (1) der Drehbewegung des Schwenkkopfs (SW) folgt.

6. Bearbeitungseinheit nach Anspruch 5, wobei zumindest das schwenkkopfseitige Anschlusselement (A1, A2) derart angeordnet ist, dass die Leitungsführungsachse des Anschlusselements (A1, A2) parallel zur Schwenkkopfdrehachse und insbesondere zentriert auf der Schwenkkopfdrehachse angeordnet ist.

7. Bearbeitungseinheit nach zumindest einem der Ansprüche 1 bis 6, wobei die Leitungsführung (L) zumindest N Glieder (1) umfasst die gelenkig miteinander verbunden sind und wobei die Enden der Leitungsführung (L) zueinander um zumindest einen Drehwinkel im Bereich von + 180° bis -180° verdrehbar sind, wobei insbesondere bei N Gliedern jeweils zwei verbundene Glieder mehr als 360°/N verdrehbar sind.

8. Bearbeitungseinheit nach zumindest einem der Ansprüche 1 bis 7, wobei benachbarte Glieder (1) der Leitungsführung (L) zueinander um zumindest einen Schwenkwinkel im Bereich von + 10° bis -10° schwenkbar sind.

9. Bearbeitungseinheit nach zumindest einem der Ansprüche 1 bis 8, wobei das Mittelstück (2) über zumindest drei getrennte rippenartige Verbindungselemente (4) mit der Ummantelung (31, 32) verbunden ist.

10. Bearbeitungseinheit nach zumindest einem der Ansprüche 1 bis 9, wobei das Mittelstück (2) zur Verbindung mit benachbarten Gliedern (1) eine Gelenkkugel (G1) und eine Kugelpfanne (G2) aufweist.

11. Bearbeitungseinheit nach zumindest einem der Ansprüche 1 bis 10, wobei das Mittelstück (2) einen Kanal (5) zur Aufnahme eines flexiblen Verbindungselements aufweist und die Glieder (1) über das flexible Verbindungselement verbunden sind.

12. Bearbeitungseinheit nach zumindest einem der Ansprüche 1 bis 11, wobei die Ummantelung (31, 32) ein schwenkbares Segment umfasst wobei das schwenkbare Segment in radiale Richtung schwenkbar ist, wobei das schwenkbare Segment insbesondere lösbar am Verbindungselement (4) angeordnet ist, und wobei das schwenkbare Segment insbesondere über ein im Endbereich des Verbindungselements (4) angebrachtes Gelenk mit dem Verbindungselement (4) verbunden ist.

13. Bearbeitungseinheit nach zumindest einem der Ansprüche 1 bis 12, wobei die Ummantelung (31, 32) die Leitungen zumindest teilweise umhüllt und sich die Glieder (1) derart überlappen, dass ein von der Ummantelung (31, 32) umschlossener Bereich gegenüber einem Bereich außerhalb der Ummantelung (31, 32) abgedichtet werden kann, insbesondere durch Dichtlippen im Verbindungsbereich der Ummantelung (31, 32) der benachbarten Glieder (1).

14. Bearbeitungseinheit nach zumindest einem der Ansprüche 1 bis 13, wobei die Verbindungsflächen der Ummantelung (31, 32) benachbarter Glieder (1) sich zumindest teilweise überlappen und/oder wobei sich die Verbindungselemente (4) vom Mittelstück (2) in radialer Richtung zur Ummantelung (31, 32) erstrecken.

15. Werkzeugmaschine mit einer Bearbeitungseinheit nach zumindest einem der vorhergehenden Ansprüche.

## Claims

1. A machining unit for use on a machine tool, comprising:
- a head carrier (K) attachable to the machine tool and including a head carrier housing (K1),
- a swivel head (SW) provided so as to swivel relative to said head carrier about a swivel head rotation axis and including a swivel head housing (SW1),
- a spindle head (SP) attached to said swivel head (SW) and including a working spindle (SP1), and
- a cable run (L) extending inside said head carrier housing (K1) to said swivel head (SW) and having a plurality of members (1) which are arranged in succession along said cable run (L) and are connected to each other movably,
wherein adjacent members (1) can swivel relative to each other,
**characterized in that** adjacent members (1) are rotatable relative to each other, and
that each member (1) has a central piece (2) and a sheathing (31, 32) spaced apart therefrom and said central piece (2) is connected to said sheathing (31, 32) via one or more connection elements (4).

2. The machining unit according to claim 1, wherein the cables are arranged in said cable run (L) and respectively run along said members (1) between said central piece (2) and said sheathing (31, 32).

3. The machining unit according to claim 1 or 2, wherein connecting surfaces of said sheathing (31, 32) of adjacent members (1) are movable relative to each other.

4. The machining unit according to at least one of the claims 1 to 3, wherein said central pieces (2) of adjacent members (1) are connected to each other via a hinged connection and said members (1) can be rotated and/or swiveled relative to each other via the hinged connection.

5. The machining unit according to at least one of the claims 1 to 4, wherein said cable run (L) can be attached to said head carrier (K) and said swivel head (SW) via respective connection elements (A1, A2), and said head carrier (K) and said swivel head (SW) can be rotated relative to each other by a rotation angle ranging at least from +180° to -180°, wherein said cable run (L) attached via said connection elements (A1, A2) follows the rotary motion of said swivel head (SW) due to the movement of said members (1).

6. The machining unit according to claim 5, wherein at least the swivel head side connection element (A1, A2) is arranged such that the cable run axis of said connection element (A1, A2) is arranged in parallel to the swivel head rotation axis, and in particular centered on said swivel head rotation axis.

7. The machining unit according to at least one of the claims 1 to 6, wherein said cable run (L) comprises at least N members (1) which are connected to each other in a hinged manner, and wherein the ends of said cable run (L) can be rotated relative to each other by a rotation angle ranging at least from +180° to -180°, wherein, in the case of N members, two connected members can be rotated relative to each other by more than 360°/N.

8. The machining unit according to at least one of the claims 1 to 7, wherein adjacent members (1) of said cable run (L) can be swiveled relative to each other by a swivel angle ranging at least from +10° to -10°.

9. The machining unit according to at least one of the claims 1 to 8, wherein said central piece (2) is connected to said sheathing (31, 32) via at least three separate rib-like connection elements (4).

10. The machining unit according to at least one of the claims 1 to 9, wherein said central piece (2) has a hinge ball (G1) and a hinge socket (G2) for the connection to adjacent members (1).

11. The machining unit according to at least one of the claims 1 to 10, wherein said central piece (2) has a channel (5) for receiving a flexible connection element and said members (1) are connected via the flexible connection element.

12. The machining unit according to at least one of the claims 1 to 11, wherein said sheathing (31, 32) comprises a swiveling segment, wherein said swiveling segment can be swiveled in a radial direction, wherein said swiveling segment is in particular detachably arranged on said connection element (4), and wherein said swiveling segment is connected to said connection element (4) via a hinge attached in the end region of said connection element (4).

13. The machining unit according to at least one of the claims 1 to 12, wherein said sheathing (31, 32) at least partly encloses the cables and said members (1) overlap in such a way that a region enclosed by said sheathing (31, 32) can be sealed from a region outside said sheathing (31, 32), in particular by sealing lips in the connection region of said sheathing (31, 32) of adjacent members (1).

14. The machining unit according to at least one of the claims 1 to 13, wherein the connection surfaces of said sheathing (31, 32) of adjacent members (1) overlap at least partly and/or wherein said connection elements (4) extend from said central piece (2) in a radial direction to said sheathing (31, 32).

15. A machine tool comprising a machining unit according to at least one of the preceding claims.

## Revendications

1. Unité d'usinage destinée à être utilisée sur une machine-outil, comportant
- un porte-tête (K) susceptible d'être monté sur la machine-outil et pourvu d'un boîtier porte-tête (K1),
- une tête pivotante (SW) agencée mobile en pivotement par rapport au porte-tête (K) autour d'un axe de rotation de tête pivotante et pourvue d'un boîtier de tête pivotante (SW1),
- une tête de broche (SP) montée sur la tête pivotante (SW) et pourvue d'une broche de travail (SP1), et
- un guidage de lignes (L) qui s'étend à l'intérieur du boîtier porte-tête (K1) jusqu'à la tête pivotante (SW) et qui est pourvu d'une pluralité de membres (1) agencés les uns derrière les autres le long du guidage de lignes (L) et reliés les uns aux autres de façon mobile,
des membres (1) voisins pouvant pivoter les uns par rapport aux autres,
**caractérisée en ce que**
des membres voisins (1) sont mobiles en rotation les uns par rapport aux autres, et
chaque membre (1) comprend une partie centrale (2) et une enveloppe (31, 32) espacée de celle-ci, et la partie centrale (2) est en liaison avec l'enveloppe (31, 32) par un ou plusieurs éléments de liaison (4).

2. Unité d'usinage selon la revendication 1, dans laquelle les lignes sont agencées dans le guidage de lignes (L) et s'étendent chacune sur les membres (1) entre la partie centrale (2) et l'enveloppe (31, 32).

3. Unité d'usinage selon la revendication 1 ou 2, dans laquelle des surfaces de liaison de l'enveloppe (31, 32) de membres voisins (1) sont mobiles les unes par rapport aux autres.

4. Unité d'usinage selon l'une au moins des revendications 1 à 3, dans laquelle les parties centrales (2) de membres voisins (1) sont reliées les unes aux autres par une liaison d'articulation, et les membres (1) peuvent être tournés et/ou pivotés les uns par rapport aux autres via la liaison d'articulation.

5. Unité d'usinage selon l'une au moins des revendications 1 à 4, dans laquelle le guidage de lignes (L) peut être fixé au porte-tête (K) et à la tête pivotante (SW) par des éléments de raccordement respectifs (A1, A2), le porte-tête (K) et la tête pivotante (SW) sont mobiles en rotation l'un par rapport à l'autre d'un angle de rotation dans la plage de +180° à -180°, et le guidage de lignes (L) fixé par les éléments de raccordement (A1, A2) suit le mouvement de rotation de la tête pivotante (SW) par le mouvement des membres (1).

6. Unité d'usinage selon la revendication 5, dans laquelle au moins l'élément de raccordement (A1, A2) côté tête pivotante est agencé de telle sorte que l'axe de guidage de lignes de l'élément de raccordement (A1, A2) est agencé parallèlement à l'axe de rotation de la tête pivotante et en particulier de façon centrée sur l'axe de rotation de la tête pivotante.

7. Unité d'usinage selon l'une au moins des revendications 1 à 6, dans laquelle le guidage de lignes (L) comprend au moins N membres (1), qui sont reliés en articulation les uns aux autres, et les extrémités du guidage de lignes (L) sont mobiles en rotation l'une par rapport à l'autre au moins d'un angle de rotation dans la plage de +180° à -180°, et en particulier dans le cas de N membres, deux membres reliés respectifs peuvent être tournés sur plus de 360°/N.

8. Unité d'usinage selon l'une au moins des revendications 1 à 7, dans laquelle des membres voisins (1) du guidage de lignes (L) peuvent pivoter les uns par rapport aux autres au moins d'un angle de pivotement dans la plage de +10° à -10°.

9. Unité d'usinage selon l'une au moins des revendications 1 à 8, dans laquelle la partie centrale (2) est reliée à l'enveloppe (31, 32) par au moins trois éléments de liaison (4) séparés réalisés en forme de nervures.

10. Unité d'usinage selon l'une au moins des revendications 1 à 9, dans laquelle la partie centrale (2) comprend une rotule d'articulation (G1) et un coussinet sphérique (G2) pour la liaison avec des membres voisins (1).

11. Unité d'usinage selon l'une au moins des revendications 1 à 10, dans laquelle la partie centrale (2) présente un canal (5) pour loger un élément de liaison flexible, et les membres (1) sont reliés par l'élément de liaison flexible.

12. Unité d'usinage selon l'une au moins des revendications 1 à 11, dans laquelle l'enveloppe (31, 32) comprend un segment pivotant, le segment pivotant peut pivoter en direction radiale, le segment pivotant est agencé en particulier de façon détachable sur l'élément de liaison (4), et le segment pivotant est relié à l'élément de liaison (4) en particulier par une articulation montée dans la zone d'extrémité de l'élément de liaison (4).

13. Unité d'usinage selon l'une au moins des revendications 1 à 12, dans laquelle l'enveloppe (31, 32) enveloppe au moins partiellement les lignes et les membres (1) se chevauchent de telle sorte qu'une zone emprisonnée par l'enveloppe (31, 32) peut être étanchée par rapport à une zone à l'extérieur de l'enveloppe (31, 32), en particulier par des lèvres d'étanchéité dans la zone de liaison de l'enveloppe (31, 32) des membres voisins (1).

14. Unité d'usinage selon l'une des revendications 1 à 13, dans laquelle les surfaces de liaison de l'enveloppe (31, 32) de membres voisins (1) se chevauchent au moins partiellement et/ou les éléments de liaison (4) s'étendent depuis la partie centrale (2) en direction radiale vers l'enveloppe (31,32).

15. Machine-outil comportant une unité d'usinage selon l'une au moins des revendications précédentes.
